Europäisches Patentamt

European Patent Office

Office européen des brevets

(11) Veröffentlichungsnummer : **0 072 786**
**B1**

# (12) EUROPÄISCHE PATENTSCHRIFT

(45) Veröffentlichungstag der Patentschrift :
08.07.87

(51) Int. Cl.⁴ : **F 16 H 19/00**

(21) Anmeldenummer : **82890114.0**

(22) Anmeldetag : **04.08.82**

(54) **Untersetzungsgetriebe.**

(30) Priorität : **17.08.81 AT 3598/81**

(43) Veröffentlichungstag der Anmeldung :
**23.02.83 Patentblatt 83/08**

(45) Bekanntmachung des Hinweises auf die Patenterteilung : **08.07.87 Patentblatt 87/28**

(84) Benannte Vertragsstaaten :
**BE DE FR GB IT SE**

(56) Entgegenhaltungen :
**DE-A- 2 932 718**
**US-A- 1 491 490**
**US-A- 3 785 214**

(73) Patentinhaber : **IGM - Industriegeräte- und Maschinenfabriks-gesellschaft mbH**
**Industriezentrum NÖ-Süd Strasse 2a, Halle M8**
**A-2351 Wiener Neudorf Niederösterreich (AT)**

(72) Erfinder : **Vokurka, Franz**
**Minorgasse 60**
**A-1140 Wien (AT)**

(74) Vertreter : **Beer, Otto, Dipl.-Ing. et al**
**Lindengasse 8**
**A-1071 Wien (AT)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 072 786 B1

## Beschreibung

Die Erfindung betrifft ein Untersetzungsgetriebe mit einer Antriebswelle und einer Abtriebswelle, wobei die Antriebswelle eine Gewindespindel ist, auf die gegen Verdrehung gesichert eine Mutter geschraubt ist, welche Mutter mit der Abtriebswelle gekuppelt ist.

In der Technik ergibt sich häufig das Problem, die Drehzahl von Antriebsmotoren, die beispielsweise mit 3 000 Umdrehungen/Minute umlaufen, sehr stark zu untersetzen, wobei das Untersetzungsgetriebe in sich kein Spiel aufweisen soll. Dieses Problem tritt beispielsweise bei Industrierobotern auf, wo wegen der nötigen Positionierungsgenauigkeiten bei Drehzahlen von 0,3 Umdrehungen/Sekunde im Antrieb möglichst kein Spiel vorliegen soll. Zu diesem Zwecke sind schon verschiedentlich aufgebaute Getriebe vorgeschlagen worden, die insbesondere auch wegen ihres großen Platzbedarfes in moderne Industrieroboter nur mit Schwierigkeiten eingebaut werden konnten.

Aus der DE-B 1 500 478 ist ein Untersetzungsgetriebe der eingangs genannten Gattung bekannt. Bei diesem bekannten Getriebe ist die auf die Gewindespindel geschraubte Mutter über eine Zahnstange mit der Abtriebswelle gekuppelt. Es ist ersichtlich, daß — soferne man einen einigermaßen großen Verdrehbereich der Abtriebswelle haben will — einerseits die Spindel, auf welcher die Mutter geschraubt ist, von der Antriebsseite (links in Figur 3 der DE-B) her gesehen über die Abtriebswelle hinausragen muß und anderseits die Zahnstange in der einen Endlage mit ihrer ganzen Länge (die für einen entsprechenden Verdrehbereich wieder groß genug sein muß) über die Abtriebswelle hinausragt. Das bekannte Getriebe besitzt also eine große Baulänge, wenn man bei entsprechender Untersetzung einen brauchbaren Verdrehbereich der Abtriebswelle benötigt, wie dies z. B. für Industrieroboter (z. B. « Knickarmroboter ») , dem bevorzugten Anwendungsgebiet der Erfindung, der Fall ist.

Der Erfindung liegt die Aufgabe zugrunde, ein insbesondere für Industrieroboter verwendbares Untersetzungsgetriebe vorzuschlagen, welches trotz kompakter Bauweise einen großen Verdrehbereich der Abtriebswelle aufweist.

Diese Aufgabe wird mit der Erfindung dadurch gelöst, daß die Mutter mit dem einen im wesentlichen parallel zur Gewindespindel verlaufenden Trum einer endlosen, um zwei Kettenräder, z. B. Zahnketträder laufenden, gespannten Kette, z. B. einer Zahnkette, verbunden ist und daß eines der beiden Kettenräder mit der Abtriebswelle drehfest verbunden ist und daß die Mutter vorzugsweise an einem die Kette spannenden Kettenschloß vorgesehen ist.

Mit der erfindungsgemäßen Ausbildung wird nicht nur eine hinreichende Positionierungsgenauigkeit, sondern auch — wegen der gespannten Kette — die nötige Spielfreiheit gewährleistet.

Neben der Spielfreiheit des erfindungsgemäßen Getriebes hat dieses noch den Vorteil, daß es ohne weiteres in länglich ausgebildeten Armen von Industrierobotern, z. B. Knickarmrobotern untergebracht werden kann.

Die beim erfindungsgemäßen Untersetzungsgetriebe erforderliche Spannung der Kette kann erfindungsgemäß dadurch gewährleistet werden, daß die Enden der Zahnkette zwischen der Mutter und einem Druckstück, das auf der der Mutter gegenüberliegenden Seite der Zahnkette angeordnet ist, geklemmt sind, wobei die zur Mitte des Druckstückes hinweisenden Flanken der Zahnung des Druckstückes an den nach außen weisenden Flanken der Zähne der Zahnkette anliegen und zwischen den anderen Flanken der Zähne vom Druckstück und Zahnkette Spiel vorliegt.

Diese Ausführungsform erleichtert das Nachspannen der Kette bei einer z. B. durch Abnützungen der Kette verursachte Längenzunahme derselben. Gesonderte Spanneinrichtungen sind entbehrlich, da das Kettenschloß nicht nur die Kette schließt und die Mutter trägt, sondern auch für die Spannung der Kette sorgt.

In einer praktischen Ausführungsform ist erfindungsgemäß weiters vorgesehen, daß das Druckstück unter Verwendung einer, in die Mutter geschraubten Schraube gegen die Mutter spannbar ist, wobei zwischen dem Schraubenkopf und der Mutter ein Tellerfederpaket vorgesehen ist. Auf diese Art und Weise ist sichergestellt, daß sich die Spannschraube nicht in unerwünschter Weise verdreht.

Weitere Einzelheiten und Merkmale der Erfindung ergeben sich aus der nachstehenden Beschreibung des in der Zeichnung wiedergegebenen Anwendungsbeispieles des erfindungsgemäßen Getriebes. Es zeigt

Figur 1 im Längsschnitt zwei Arme eines Knickarmroboters mit Untersetzungsgetrieben zum Bewegen der Arme,

Figuren 2 und 3 Horizontalschnitte durch die beiden Arme aus Figur 1.

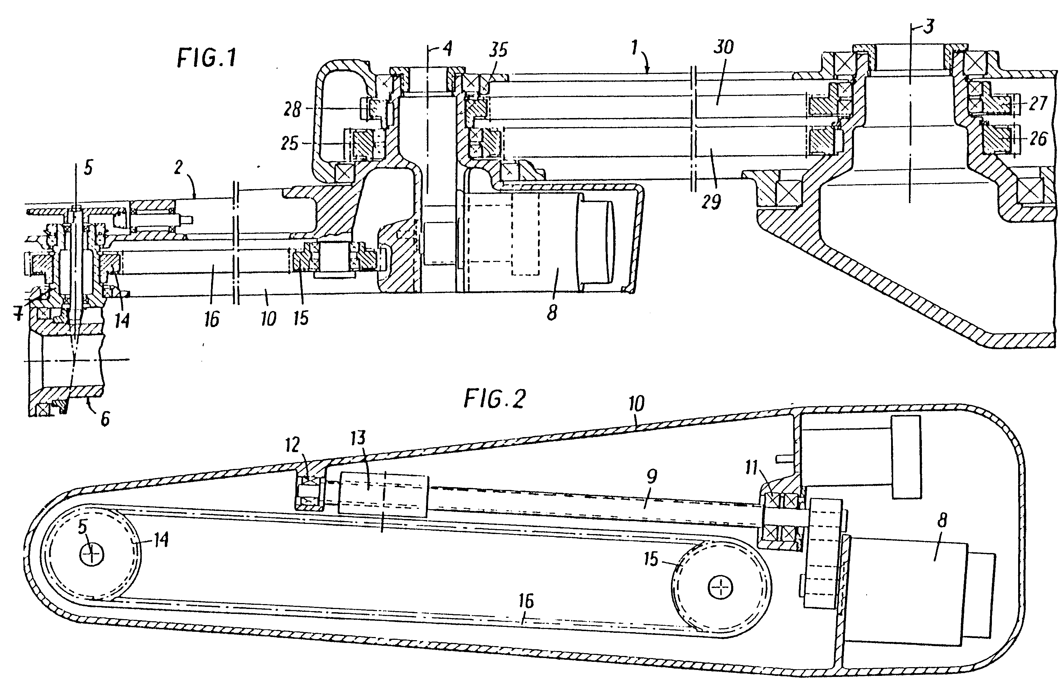

In Figur 1 sind zwei Arme 1 und 2 eines Knickarmroboters dargestellt, wobei der Arm 1 um eine Achse 3 verschwenkbar ist und an seinem freien Ende um eine Achse 4 verschwenkbar den anderen Arm 2 trägt. Am freien Ende des Armes 2 ist um eine weitere Achse 5 verdrehbar beispielsweise eine Halterung 6 für eine Schweißpistole oder -zange, ein Manipulationswerkzeug od. dgl. vorgesehen.

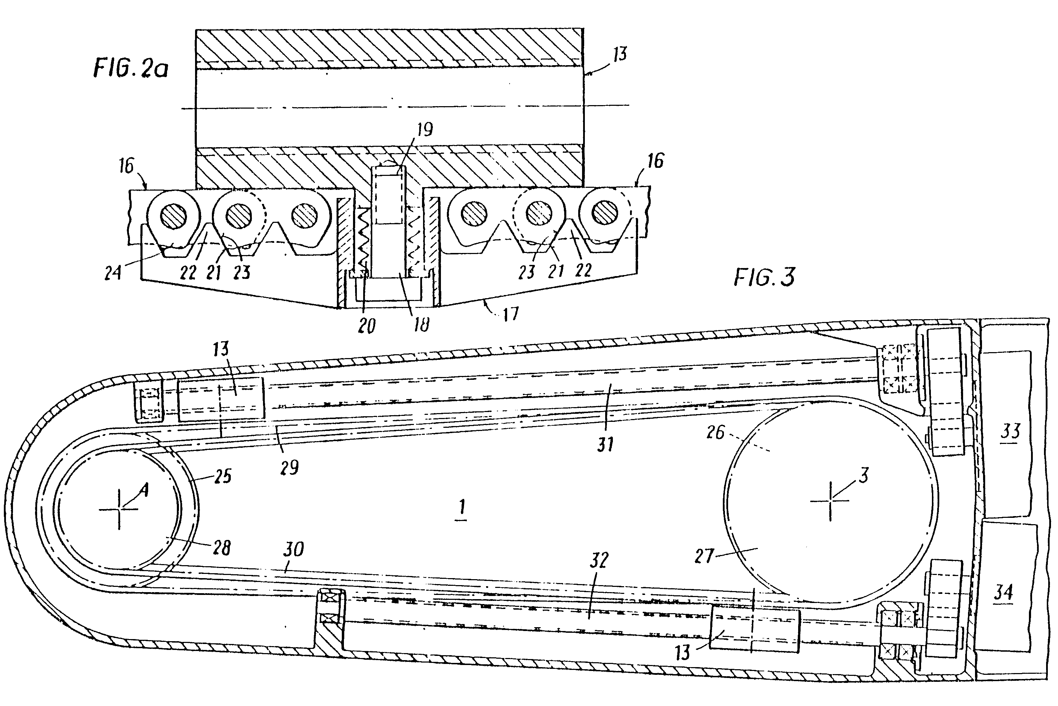

Der besseren Verständlichkeit wegen wird zunächst unter Bezugnahme auf Figur 2 das Untersetzungsgetriebe des Armes 2 zur Betätigung der Welle 7 der Halterung 6, die um die Achse 5 verdrehbar ist, beschrieben.

Das Untersetzungsgetriebe umfaßt eine von einem Motor 8 antreibbare Gewindespindel 9, die im Gehäuse 10 des Armes 2 etwa in dessen Längsrichtung verlaufend in Lagern 11 und 12 gelagert ist. Auf die Gewindespindel 9 ist eine Mutter 13 geschraubt, die mit einer um zwei Kettenzahnräder 14 und 15 laufende Zahnkette 16 verbunden und gleichzeitig gegen Verdrehung gesichert ist. Wie aus Figur 1 ersichtlich, ist das Kettenzahnrad 14 drehfest mit der den Antrieb des Untersetzungsgetriebes darstellenden Welle 7 verbunden.

Die Verbindung zwischen Mutter 13 und Zahnkette 16 erfolgt mit Hilfe eines, eine Zahnung aufweisenden Druckstückes 17, das unter Verwendung einer Schraube 18, die in eine Gewindebohrung 19 der Mutter 13 eingeschraubt ist, unter Zwischenschaltung eines Tellerfederpaketes 20 gegen die Mutter 13 verspannbar ist. Die beiden Enden der Zahnkette 16 werden zwischen der Mutter 13 und dem Druckstück 17 geklemmt, wobei die zur Mitte des Druckstückes hinweisenden Flanken 21 seiner Zahnung 22 an den nach außen weisenden Flanken 23 der Zähne 24 der Zahnkette 16 anliegen und zwischen den anderen Flanken, d. h. den nach außen weisenden Flanken der Zahnung 22 und den zur Schraube 18 hinweisenden Flanken der Zähne 24 der Kette 16 Spiel besteht. Es ist daher möglich, die Kette 16 durch Anziehen der Spannschraube 18 zu spannen.

Auf diese Weise ist eine Verdrehung der Welle 7 mit geringen Drehgeschwindigkeiten unter Verwendung des Antriebsmotors 8 möglich, wobei das Untersetzungsgetriebe wegen der Spannung der Kette 16 spielfrei arbeitet.

Im Arm 1 sind zwei erfindungsgemäß ausgebildete Untersetzungsgetriebe eingebaut, von welchen eines das Verschwenken des Armes 1 um die Achse 3 und das andere das Verschwenken des Armes 2 um die Achse 4 bewirkt. Hierzu sind im Arm 1 übereinanderliegend zwei um Zahnradpaare 25 und 26 bzw. 27 und 28 umlaufende Zahnketten 29 und 30 vorgesehen, denen, wie aus Figur 3 ersichtlich, je eine Gewindespindel 31 bzw. 32 mit einer Mutter 13 zugeordnet ist. Die Gewindespindeln 31 und 32 sind durch Motore 33 bzw. 34 antreibbar.

Zur Bewegung des Armes 1 um die Achse 3 wird die Gewindespindel 31, welche der über die Zahnräder 25 und 26 laufenden Zahnkette 29 zugeordnet ist, über den Antriebsmotor 33 in Bewegung versetzt. Zum Verschwenken des Armes 2 um die Achse 4 wird die Zahnkette 30 betätigt, die um das frei drehbare Zahnrad 27 und das mit der der Achse 4 entsprechenden Welle 35 drehfest verbundene Zahnrad 28 läuft.

## Patentansprüche

1. Untersetzungsgetriebe mit einer Antriebswelle und einer Abtriebswelle (7 ; - ; 35), wobei die Antriebswelle eine Gewindespindel (9 ; 31 ; 32) ist, auf die gegen Verdrehung gesichert eine Mutter (13) geschraubt ist, welche mit der Abtriebswelle (7 ; 35) gekuppelt ist, dadurch gekennzeichnet, daß die Mutter (13) mit einem im wesentlichen parallel zur Gewindespindel verlaufenden Trum einer endlosen, um zwei Kettenräder, z. B. Zahnkettenräder (14, 15 ; 25, 26 ; 27, 28) laufenden, gespannten Kette (16 ; 29 ; 30), z. B. einer Zahnkette, verbunden ist und daß eines der beiden Kettenräder (14 ; 26 ; 28) mit der Abtriebswelle drehfest verbunden ist und daß die Mutter (13) vorzugsweise an einem die Kette spannenden Kettenschloß vorgesehen ist.

2. Getriebe nach Anspruch 1, dadurch gekennzeichnet, daß die Enden der Zahnkette zwischen der Mutter (13) und einem Druckstück (17), das auf der der Mutter gegenüberliegenden Seite der Zahnkette angeordnet ist, geklemmt sind, wobei die zur Mitte des Druckstückes (17) hinweisenden Flanken (21) der Zahnung (22) des Druckstückes (17) an den nach außen weisenden Flanken (23) der Zähne (24) der Zahnkette anliegen und zwischen den anderen Flanken der Zähne (22, 24) vom Druckstück (17) und Zahnkette (16) Spiel vorliegt.

3. Getriebe nach Anspruch 2, dadurch gekennzeichnet, daß das Druckstück (17) unter Verwendung einer, in die Mutter (13) geschraubten Schraube (18) gegen die Mutter spannbar ist, wobei zwischen Schraubenkopf und Mutter ein Tellerfederpaket (20) vorgesehen ist.

## Claims

1. Reduction gear with a drive shaft and a driven shaft (7 ; - ; 35), wherein the drive shaft is a lead screw (9 ; 31 ; 32) on which is screwed a nut (13) secured against rotation, which is coupled to the driven shaft (7 ; 35), characterised in that the nut (13) is connected to a run, extending substantially parallel to the lead screw, of an endless, tensioned chain (16 ; 29 ; 30), e. g. a toothed chain, running over two sprocket wheels, e. g. toothed-chain wheels (14, 15 ; 25, 26 ; 27, 28), and in that one of the two sprocket wheels (14 ; 26 ; 28) is rotationally fast with the driven shaft and in that the nut (13) is preferably provided on a chain closer tensioning the chain.

2. Gear according to claim 1, characterised in that the ends of the toothed chain are clamped between the nut (13) and a pressure piece (17), which is arranged on the side of the toothed chain opposite the nut, wherein the flanks (21) of the toothing (22) of the pressure piece (17) facing towards the middle of the pressure piece (17) lie against the outwardly directed flanks (23) of the teeth (24) of the toothed chain, and there is play between the other flanks of the teeth (22, 24) of the pressure piece (17) and the toothed chain (16).

3. Gear according to claim 2, characterised in that the pressure piece (17) can be tightened against the nut (13) by means of a screw (18) screwed into the nut, wherein a washer spring pack (20) is provided between the screw head and the nut.

## Revendications

1. Engrenage réducteur, à arbres menant et mené (7 ; - ; 35), dont l'arbre menant est une broche filetée (9 ; 31 ; 32) sur laquelle est vissé, et bloqué en rotation, un écrou (13) couplé avec l'arbre mené (7 ; 35), engrenage caractérisé par le fait que l'écrou (13) est relié à un brin, de direction essentiellement parallèle à la broche filetée, d'une chaîne sans fin (16 ; 29 ; 30), par exemple dentée, tendue en entourant deux roues à chaîne, par exemple à chaîne dentée (14, 15 ; 25, 26 ; 27, 28), que, de ces deux roues à chaîne, l'une (14 ; 26 ; 28) est reliée sans rotation relative possible à l'arbre mené et que l'écrou (13) est de préférence placé sur une maille de joint raidissant la chaîne.

2. Engrenage selon la revendication 1 caractérisé par le fait que les extrémités de la chaîne dentée sont pincées entre l'écrou (13) et une pièce de pression (17) qui est placée sur le côté de ladite chaîne dentée situé à l'opposé de l'écrou, les flancs de la denture (22) de la pièce de pression (17) orientés vers le centre de cette dernière étant en appui contre les flancs tournés vers l'extérieur des dents (24) de la chaîne dentée et un certain jeu régnant entre les autres flancs des dents (22, 24) de la pièce de pression (17) et de la chaîne dentée (16).

3. Engrenage selon la revendication 2 caractérisé par le fait que la pièce de pression (17) est serrable contre l'écrou (13) par utilisation d'un boulon (18) vissé dans ce dernier, un paquet de ressorts à rondelle (20) étant interposé entre la tête du boulon et l'écrou.

FIG.1

FIG.2

0 072 786

FIG.2a

FIG.3